# EUROPÄISCHE PATENTANMELDUNG

(11) **EP 2 025 489 A2**
(43) Veröffentlichungstag der Anmeldung: **18.02.2009**
(21) Anmeldenummer: 08154715.0
(22) Anmeldetag: 17.04.2008
(51) Int. Cl.: B29C 44/18, B60J 10/00, B60J 10/08, B62D 65/00

(54) **Verfahren zur Herstellung einer Dichtung, Vorrichtung zur Herstellung einer Dichtung sowie Dichtung, insbesondere zum Abdichten eines Schließelements eines Kraftfahrzeugs**

(30) Priorität: 20.04.2007 DE 102007018792
(71) Anmelder: Metzeler Automotive Profile Systems GmbH, 88131 Lindau/Bodensee (DE)
(72) Erfinder: Heider, Richard, 88147 Achberg (DE); Brummer, Clemens, 88142 Wasserburg (DE)
(74) Vertreter: Schober, Christoph D.

(57) **Zusammenfassung**

Die Erfindung betrifft ein Verfahren zur Herstellung einer Dichtung (10), insbesondere für ein Schließelement eines Kraftfahrzeugs (132), wobei sich die Dichtung (10) in einer Längsrichtung (L) erstreckt und eine Hohlkammer (18) aufweist. In einem Abschnitt (134) der Dichtung (10) wird entlang der Längsrichtung (L) eine aufschäumende Masse (68) in die Hohlkammer (18) eingespritzt. Die Erfindung betrifft ferner ein Vorrichtung (50, 110) zur Herstellung einer Dichtung (10) und eine solche Dichtung (10).

## Beschreibung

Die Erfindung betrifft ein Verfahren zur Herstellung einer Dichtung, eine Vorrichtung zur Herstellung einer Dichtung und eine Dichtung, insbesondere zum Abdichten eines Schließelements eines Kraftfahrzeugs, wobei sich die Dichtung in einer Längsrichtung erstreckt und eine Hohlkammer aufweist.

Dichtungen der eingangs genannten Art sind im Stand der Technik vielfach bekannt, beispielsweise als Tür- oder Kofferraumdichtungen für Kraftfahrzeuge. Die verwendeten Hohlkammerdichtungen werden an den äußeren Rändern eines Schließelements eines Kraftfahrzeugs entlanggeführt. Dabei werden die Dichtungen geknickt beziehungsweise gekrümmt, was beispielsweise eine Faltenbildung in der Dichtung zur Folge hat, auf Grund derer die Funktion der Dichtung beeinträchtigt wird.

Um die Falten beziehungsweise Knickbildung an Krümmungen der Dichtung zu vermeiden, sind aus dem Stand der Technik verschiedene Ansätze bekannt.

So wird in der DE 202 16 759 U1 ein Dichtungsstrang zum Abdichten eines Spalts zwischen einem beweglichen Fahrzeugteil und der Karosserie eines Automobils vorgeschlagen, dessen Dichtungsprofil als Hohlkammerprofil ausgebildet ist. Der Dichtungsstrang ist dabei in mindestens einem Bereich starker Krümmung als verstärktes Dichtungsprofil ausgebildet, wobei in die Wand der Hohlkammer eingearbeitete Verstärkungen ein Einfallen der Hohlkammer verhindern oder begrenzen. Die Verstärkungen werden durch variables Extrudieren erzeugt.

Einen ähnlichen Ansatz verfolgt die DE 101 48 332 B4, in der eine gummielastische Dichtung zur Abdichtung einer zwischen einem Karosserieschwenkteil, insbesondere einem Gepäckraumdeckel, und der Karosserie vorhandenen Fuge mit einem Dichtungsschlauch mit einem Hohlraum offenbart ist. In dem Hohlraum des Dichtungsschlauchs ist ein Pufferelement angeordnet, das sich in Längsrichtung des Dichtungsschlauchs erstreckt. Der Dichtungsschlauch und das Pufferelement sind im Zweikomponentenspritzgießverfahren hergestellt, wobei das Pufferelement in Bezug auf den Dichtungsschlauch eine höhere Shore-Härte aufweist. Zur Herstellung des Dichtungsschlauches ist ein Extrusionsprozess mit einem variablen Extrudierwerkzeug vorgesehen.

Die Erfindung geht auf die Aufgabe zurück, ein Verfahren zur Herstellung einer Dichtung der eingangs genannten Art vorzuschlagen, das auf preiswerte und zuverlässige Art und Weise eine Dichtung hervorbringt, die in Krümmungsbereichen gegen Knicken und Einfallen geschützt ist. Weiter ist es Aufgabe der Erfindung, eine Vorrichtung zur Herstellung einer solchen Dichtung und eine solche Dichtung vorzuschlagen.

Diese Aufgabe wird durch ein Verfahren nach dem beigefügten Patentanspruch 1, eine Vorrichtung nach dem beigefügten Patentanspruch 17 sowie eine Dichtung nach dem beigefügten Patentanspruch 27 gelöst.

Vorteilhafte Ausgestaltungen sind Gegenstand der abhängigen Ansprüche.

Bei dem erfindungsgemäßen Verfahren zur Herstellung einer Dichtung, insbesondere für ein Schließelement eines Kraftfahrzeugs, wobei sich die Dichtung in einer Längsrichtung erstreckt und eine Hohlkammer aufweist, wird in einem Abschnitt der Dichtung entlang der Längsrichtung eine aufschäumende Masse in die Hohlkammer eingespritzt.

Mit dem erfindungsgemäßen Verfahren wird ermöglicht, die Dichtung durch das Einspritzen der aufschäumenden Masse auszusteifen beziehungsweise dauerhaft formstabil halten zu können. Zugleich kann die aufgeschäumte Masse als Anschlagelement beispielsweise für ein Schließelement eines Kraftfahrzeugs dienen. Die so geschaffene Aussteifung beziehungsweise das Anschlagelement reduzieren oder verhindern das Einfallen der Hohlkammer oder die Faltenbildung insbesondere in gekrümmt verlaufenden Bereichen der Dichtung. Die aufgeschäumten Bereiche können auf einfache Weise in beliebigen Längen, Abständen und Häufigkeiten vorgesehen werden. Ferner lässt sich die Einfederkraft über die Dichte der aufschäumenden beziehungsweise aufgeschäumten Masse einstellen.

Ferner hat das Verfahren den Vorteil, dass die Kosten eines variablen Extrudierwerkzeugs vermieden werden. Weiterhin ergibt sich ein geringerer Ausschuss im Vergleich zur herkömmlichen variablen Extrusion, da die Ausschäumung auf Gutteile beschränkt werden kann.

Vorteilhaft wird die aufschäumende Masse derart in die Hohlkammer eingespritzt, dass die Hohlkammer wenigstens in einem Querschnitt in einer im wesentlichen senkrecht zur Längsrichtung verlaufenden Querrichtung innerhalb des Abschnittes vollständig mit der aufschäumenden Masse ausgefüllt ist. Dadurch wird erreicht, dass die Härte beziehungsweise die Zusammendrückbarkeit der Dichtung in dem Abschnitt im Wesentlichen durch die aufgeschäumte Masse einstellbar ist.

Weiter kann vorgesehen sein, dass die aufschäumende Masse derart eingespritzt wird, dass die Hohlkammer entlang des Abschnittes vollständig mit der aufschäumenden Masse ausgefüllt ist. Damit wird erreicht, dass die aufschäumende Masse im Bereich des Abschnittes die Form der Hohlkammer vollständig abstützt und die Dichtung über den gesamten Abschnitt eine gleichmäßige Härte aufweist. Alternativ kann die aufschäumende Masse aber auch derart eingespritzt werden, dass sie entlang der Längsrichtung eine veränderliche vorbestimmte Querschnittform aufweist. So lässt sich beispielsweise eine in Längsrichtung zu- oder abnehmende Härte einstellen.

Bevorzugt wird ein vorbestimmtes Volumen aufschäumender Masse in die Hohlkammer eingespritzt. Dadurch lassen sich der Grad des Ausfüllens der Hohlkammer und somit die Härte der fertigen Dichtung einstellen.

Die aufschäumende Masse wird bevorzugt in einen Abschnitt eingespritzt, der beim bestimmungsgemäßen Gebrauch der Dichtung einem gekrümmt verlaufenden Bereich der Dichtung entspricht. Damit wird die Hohlkammer zuverlässig durch die aufschäumende Masse abgestützt, so dass ein Einfallen oder Knicken der Dichtung in Krümmungsbereichen verhindert wird.

Die aufschäumende Masse kann vorteilhafterweise in mehreren Abschnitten entlang der Längsrichtung eingespritzt werden. Dadurch kann die Dichtung zur Verwendung mit mehreren Krümmungsstellen vorbereitet werden. Es sind keine aufwändigen Übergänge im Bereich der Enden des Abschnittes erforderlich. Die Abschnitte können in vorbestimmten Abständen zueinander, vorzugsweise in äquidistanten Abständen vorgesehen werden. So können je nach Typ des abzudichtenden Bauteils entsprechende Muster oder Abfolgen von Abständen vorgegeben werden. Ferner kann auch ein verallgemeinertes Muster von Abständen für mehrere Bauteiltypen festgelegt werden. Dies liegt beispielsweise auch an den geringen Materialkosten für den zu injizierenden Schaum.

Bevorzugt wird mit einer Hohlnadel an einer Einstichstelle in die Hohlkammer gestochen und die aufschäumende Masse durch die Hohlnadel in die Hohlkammer eingespritzt. Damit ist ein preisgünstiger Zugang zu der Hohlkammer gewährleistet, mit dem beliebige Hohlkammern mit der aufschäumenden Masse ausgestattet werden können, ohne bereits bei der Herstellung der Hohlkammer dafür vorbereitet sein zu müssen. Das Hohlnadel-Werkzeug ist weitgehend unabhängig von der Hohlkammergeometrie und somit universell einsetzbar.

Vorteilhafterweise wird die Hohlkammer während des Einspritzens in einem vorgegebenen Abstand von der Einstichstelle zusammengedrückt, um zu erreichen, dass die aufschäumende Masse ihre Wirkung in einem bestimmten Abschnitt der Dichtung entfaltet. Das Zusammendrücken bewirkt insbesondere einen Drosseleffekt, der einen gewissen Druck aufbaut, wodurch die Hohlkammer besser mit der aufschäumenden Masse ausgefüllt werden kann. Bevorzugt beträgt der Abstand von der Einstichstelle zwischen ca. 30 mm und ca. 100 mm.

Die aufschäumende Masse wird bevorzugt in einer Einspritzzeit zwischen ca. 0,5s und ca. 5s, vorzugsweise zwischen ca. 1s und ca. 3s, eingespritzt. Damit wird der Einspritzvorgang ausreichend kurz gehalten, so dass er in einer Serienproduktion eingesetzt werden kann. Ferner kann die einzuspritzende Menge durch die Einspritzzeit bestimmt werden.

Um ein schnelles Aushärten zu erreichen, kann die aufschäumende Masse zum Aushärten wärmebehandelt werden. Die Wärmebehandlung kann beispielsweise mittels Mikrowellen erfolgen. Hierbei ergibt sich der Vorteil, dass nur die Eigenschaften des Schaumstoffmaterials, aber nicht die der übrigen Bestandteile der Dichtung verändert werden. Ferner kann so eine Vielzahl von Rohstoffen zur Bildung der aufschäumenden Masse verwendet werden.

Vorteilhaft wird die Dichtung aus einem elastomeren Werkstoff, vorzugsweise aus einem thermoplastischen Elastomer oder aus EPDM, extrudiert. Diese Extrusion kann auf den Einspritzvorgang entsprechend abgestimmt werden, insbesondere im Hinblick auf die zeitliche Abfolge.

Bevorzugt weist die Dichtung einen Dichtungsabschnitt und einen Befestigungsabschnitt auf, wobei der Dichtungsabschnitt und der Befestigungsabschnitt koextrudiert werden. Auf diese Weise wird eine zuverlässige Verbindung von Dichtungs- und Befestigungsabschnitt gewährleistet.

Die erfindungsgemäße Vorrichtung zur Herstellung einer Dichtung, insbesondere für ein Schließelement eines Kraftfahrzeugs, wobei sich die Dichtung in einer Längsrichtung erstreckt und eine Hohlkammer aufweist, ist gekennzeichnet durch eine Einspritzeinheit zum Einspritzen einer aufschäumenden Masse in die Hohlkammer und durch eine Positioniereinheit zur Positionierung der Dichtung relativ zur Einspritzeinheit, wobei die Dichtung und/oder die Einspritzeinheit entlang der Längsrichtung bewegbar ist.

Mit der erfindungsgemäßen Vorrichtung kann die Dichtung und/oder die Einspritzeinheit auf einfache Art und Weise in geeigneter Position bezüglich der Dichtung oder der Einspritzeinheit positioniert und sodann die aufschäumende Masse in die Hohlkammer eingebracht werden. Insbesondere bei einer Injizierung mehrerer Abschnitte entlang der Längsrichtung kann eine schnelle Abfolge der einzelnen Einspritzungen erreicht werden. Ferner lässt sich der Einspritzort mit hoher Genauigkeit erreichen. Auf diese Weise lässt sich eine schnelle Fertigung sowie eine Kosteneinsparung erzielen.

In vorteilhafter Ausgestaltung kann die Einspritzeinheit kann bewegbar und variabel ortsfest positionierbar sein. Bevorzugt ist die Einspritzeinheit über eine Führungseinheit bewegbar. Diese Führungseinheit kann Bestandteil der Positioniereinheit sein.

Weiter ist vorzugsweise die Einspritzeinheit an oder mittels der Führungseinheit variabel ortsfest festlegbar. Dies dient der genauen Positionierung der Einspritzeinheit. Die Führungseinheit weist bevorzugt wenigstens eine Handhabungseinheit, ein Förderband, eine Führungsschiene und/oder wenigstens ein Laufrad auf.

Vorteilhaft ist die Einspritzeinheit in der und/oder entgegen der Längsrichtung bewegbar. Damit kann die Einspritzeinheit verschiedene Einspritzorte in unabhängiger Reihenfolge entlang der Längsrichtung erreichen.

Vorteilhaft weist die Vorrichtung eine Extrusionseinheit zum Extrudieren der Dichtung auf.

In einer weiteren vorteilhaften Ausgestaltung ist die Einspritzeinheit mit einer vorbestimmten Geschwindigkeit bewegbar. Bevorzugt ist die Geschwindigkeit relativ zu einer Prozessgeschwindigkeit der Extrusionseinheit oder umgekehrt einstellbar. Damit ist es möglich, dass die Einspritzeinheit der Bewegung der Dichtung genau folgen kann. Mit anderen Worten kann die Einspritzeinheit mitlaufend eingerichtet werden.

Bevorzugt weist die Vorrichtung eine Trenneinheit zum Ablängen der Dichtung auf. Mit dieser Trenneinheit kann die Dichtung auf eine benötigte oder geforderte Länge zugeschnitten werden.

Die erfindungsgemäße Dichtung, insbesondere zum Abdichten eines Schließelements eines Kraftfahrzeugs, erstreckt sich in einer Längsrichtung und weist eine Hohlkammer auf. Ferner ist in einem Abschnitt entlang der Längsrichtung eine aufgeschäumte Masse in der Hohlkammer eingespritzt.

Eine solche Dichtung weist den Vorteil auf, dass sie ihren Querschnitt beibehält, wenn sie gebogen wird, und kein Einfallen oder Falten auftritt. Damit ist gewährleistet, dass die Dichtungsfunktion der Dichtung auch an Krümmungsstellen beim bestimmungsgemäßen Gebrauch der Dichtung erfüllt wird und die Dichtung eine lange Lebensdauer hat. Vorteilhafterweise wird die Dichtung mit dem erfindungsgemäßen Verfahren und der erfindungsgemäßen Vorrichtung hergestellt. Die Dichtung macht sich insbesondere die oben bereits zu dem Verfahren und der Vorrichtung genannten Vorteile zu Nutze.

Vorteilhaft ist die Hohlkammer wenigstens in einem Querschnitt in einer im wesentlichen senkrecht zur Längsrichtung L verlaufenden Querrichtung innerhalb des Abschnittes vollständig mit der aufgeschäumten Masse ausgefüllt. Die Hohlkammer kann auch entlang des Abschnittes vollständig mit der aufgeschäumten Masse ausgefüllt sein. Damit wird eine besonders gute Formstabilität der Dichtung in diesem Abschnitt erreicht. Ferner kann so die Einfederkraft der Dichtung eingestellt werden.

Die aufgeschäumte Masse ist bevorzugt in einem Abschnitt entlang der Längsrichtung vorgesehen, der beim bestimmungsgemäßen Gebrauch der Dichtung einem gekrümmt verlaufenden Bereich der Dichtung entspricht. Somit ist sichergestellt, dass die Dichtung in einem besonders beanspruchten Bereich stabilisiert beziehungsweise ausgesteift wird. Ferner wird die Faltenbildung reduziert.

Vorzugsweise ist die aufgeschäumte Masse in mehreren Abschnitten entlang der Längsrichtung vorgesehen. Die Abschnitte können in vorbestimmten Abständen zueinander vorgesehen sein, vorzugsweise in äquidistanten Abständen.

In einer weiter bevorzugten Ausführungsform ist die aufgeschäumte Masse aus einem Einkomponenten-Schaumstoff oder einem Zweikomponenten-Schaumstoff gebildet. Diese Schaumstoffe können beispielsweise auf Polyurethan-Basis gebildet sein.

Vorzugsweise hat die aufgeschäumte Masse eine Shore-Härte von zwischen ca. 45 Shore A und ca. 42 Shore 00. Durch die Variationsmöglichkeiten in diesem Bereich kann die Dichtung exakt auf die Anforderung in ihrer speziellen Einbausituation abgestimmt werden.

Weiter bevorzugt weist die Dichtung einen Dichtungsabschnitt und einen Befestigungsabschnitt auf, wobei die aufgeschäumte Masse stoffschlüssig und/oder formschlüssig mit dem Dichtungsabschnitt und/oder dem Befestigungsabschnitt verbunden ist. Zur einfachen Befestigung der Dichtung kann der Befestigungsabschnitt einen Aufnahmekanal zur Aufnahme eines starren Bauteils aufweisen.

Die Erfindung wird nachfolgend anhand von Ausführungsbeispielen weiter erläutert, die in den beigefügten Zeichnungen dargestellt sind. Es zeigen:
- Fig. 1: einen Querschnitt durch eine erfindungsgemäße Dichtung;
- Fig. 2: eine erste Ausführungsform einer erfindungsgemäßen Vorrichtung zur Herstellung der Dichtung gemäß Fig. 1;
- Fig. 3: eine Schaumanlage für die Vorrichtung gemäß Fig. 2;
- Fig. 4: eine zweite Ausführungsform einer erfindungsgemäßen Vorrichtung zur Herstellung der Dichtung gemäß Fig. 1, und
- Fig. 5: eine Rückansicht eines Kraftfahrzeugs mit einer Heckklappe und der Dichtung gemäß Fig. 1.

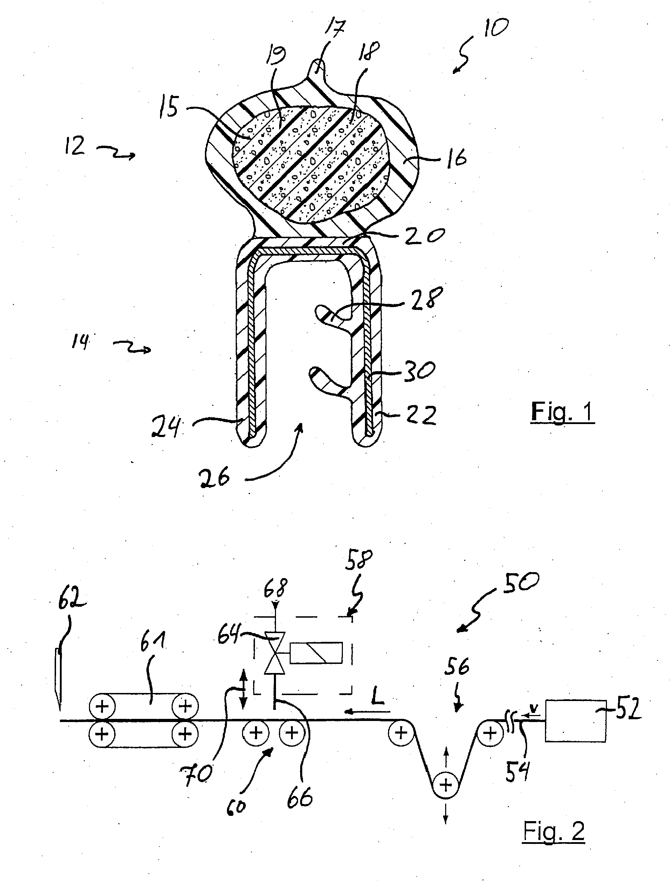

Die in Fig. 1 gezeigte Dichtung 10 erstreckt sich entlang einer Längsrichtung L und umfasst einen Dichtungsabschnitt 12 und einen Befestigungsabschnitt 14. Der Dichtungsabschnitt 12 weist eine Hohlkammerwand 16 auf, die eine Hohlkammer 18 umschließt. In der Hohlkammer 18 ist eine aufgeschäumte Masse in Form eines Schaumstoffes 19 eingespritzt. Die Hohlkammerwand 16 hat eine Dichtlippe 17.

Der Befestigungsabschnitt 14 weist einen Basisabschnitt 20 sowie einen ersten Schenkel 22 und einen zweiten Schenkel 24 auf. Der Basisabschnitt 20, der erste Schenkel 22 und der zweite Schenkel 24 begrenzen einen Aufnahmekanal 26, der der Aufnahme eines starren Bauteils, beispielsweise eines Flanschs, dient. Von dem ersten Schenkel 22 aus erstrecken sich Vorsprünge 28 in Richtung des zweiten Schenkels 24 in den Aufnahmekanal 26. In den Befestigungsabschnitt 14 ist zur Erhöhung der Formstabilität eine Armierung 30 eingebettet.

Der Befestigungsabschnitt 14 dient der sicheren Befestigung der Dichtung 10, beispielsweise an einem Flansch einer Kofferraumumrandung. Wenn die Dichtung 10 auf den Flansch aufgesteckt ist, stellen die Vorsprünge 28 sicher, dass sich die Dichtung 10 nur unter großer Kraftaufwendung wieder abziehen lässt.

Der Dichtungsabschnitt 12 dient insbesondere dem flüssigkeitsdichten Verschluss einer Öffnung zwischen dem Bauteil, auf das die Dichtung 10 aufgesteckt ist und einem weiteren Bauteil, dass an den Dichtungsabschnitt 12, insbesondere die Hohlkammerwand 16, angelegt wird. Im Allgemeinen wird der Dichtungsabschnitt 12 dabei durch den Druck zwischen den beiden Bauteilen zusammengedrückt. Der in der Hohlkammer 18 injizierte Schaumstoff 19 trägt durch seine Materialeigenschaften zur Aufrechterhaltung der Form der Hohlkammerwand 16 bei.

Eine erste Ausführungsform einer Vorrichtung 50 zur Herstellung der Dichtung 10 gemäß Fig. 1 ist in Fig. 2 gezeigt. Zunächst erzeugt eine Extrudiereinheit 52 einen Dichtungsprofilstrang 54, der den Dichtungsabschnitt 12 und den Befestigungsabschnitt 14 umfasst, dessen Hohlkammer 18 jedoch noch keinen Schaumstoff 19 enthält. Die Extrudiereinheit 52 erzeugt den Dichtungsprofilstrang 54 mit konstanter Geschwindigkeit v. Die Extrudiereinheit 54 kann der Vorrichtung 50 zugeordnet oder ein separates Werkzeug sein. Im letztgenannten Fall wird der Dichtungsprofilstrang 54 beispielsweise nach Zulieferung oder Zwischenlagerung der Vorrichtung 50 zugestellt.

Wie aus Fig. 2 zu erkennen, umfasst die Vorrichtung 50 eine Positioniereinheit 60, um den sich entlang der Längsrichtung L erstreckenden Dichtungsprofilstrang 54 in einer geeigneten Position relativ zu der ortsfest festgelegten Einspritzeinheit 58 positionieren zu können und anschließend das Einspritzen zu ermöglichen. Diese Positioniereinheit 60 kann wenigstens eine Führungs-, Halte- und/oder Transporteinheit umfassen. Gemäß Fig. 2 kann die Positioniereinheit 60 mehrere Rollen beziehungsweise Räder, ein Förderband und/oder eine Längenausgleichseinheit 56 aufweisen.

Der Dichtungsprofilstrang 54 wird mittels der Transporteinheit 61 über die Längenausgleichseinheit 56 zu der Einspritzeinheit 58 befördert. Im Bereich der Transporteinheit 61 wird zugleich eine Längenmessung vorgenommen, beispielsweise beginnend an einem freien Ende des Dichtungsprofilstranges 54, um den wenigstens einen mit einer aufschäumenden Masse 68 zu versehenden Abschnitt 134 bestimmen zu können. Nachdem die aufschäumende Masse 68 im Bereich des Abschnittes 134 oder der Abschnitte 134 eingespritzt worden ist, wird der Dichtungsprofilstrang 54 mittels einer Trenneinheit 62 in der gewünschten Länge abgelängt.

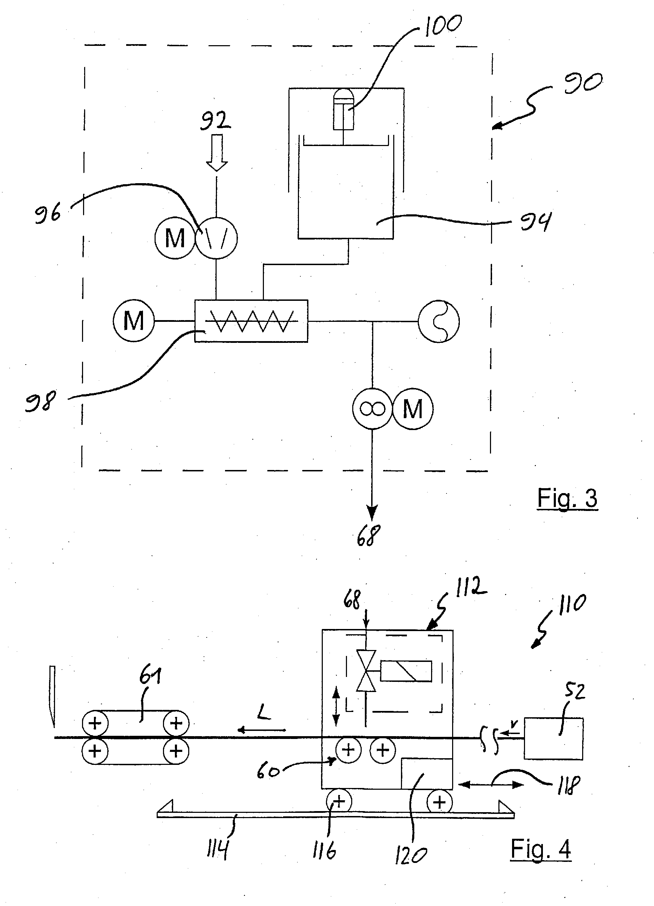

Die Einspritzeinheit 58 weist ein Eintragsventil 64 sowie eine Hohlnadel 66 auf. Das Eintragsventil 64 dient der Portionierung einer aufgeschäumten Masse 68, die von einer Schaumanlage 90, die in Fig. 3 gezeigt ist, erzeugt wird.

Der Dichtungsprofilstrang 54 wird mittels der Transporteinheit 61 solange transportiert, bis mittels der der Transporteinheit 61 zugeordneten Längenmesseinheit festgestellt wird, dass sich ein auszusteifender Abschnitt des Dichtungsprofilstrangs 54 unter der Hohlnadel 66 befindet. Daraufhin wird der Transport des Dichtungsprofilstrangs 54 unterbrochen und die Längenausgleichseinheit 56 nimmt den weiter kontinuierlich zugeführten Dichtungsprofilstrang 54 temporär auf. Die Einspritzeinheit 58 wird nun entlang der Richtung 70 so auf den Dichtungsprofilstrang 54 zu verfahren, dass die Hohlnadel 66 in die Hohlkammerwand 16 des Dichtungsabschnitts 12 eindringt. Anschließend wird das Eintragsventil 64 für eine vorbestimmte Zeit geöffnet, um die aufgeschäumte Masse 68 in die Hohlkammer 18 einzuleiten. Nachdem das Eintragsventil 64 wieder geschlossen ist, wird die Einspritzeinheit 58 entlang der Richtung 70 von dem Dichtungsprofilstrang 54 weg verfahren. Die in die Hohlkammer 18 eingespritzte aufgeschäumte Masse 68 härtet zu einem Schaumstoff 19 aus und stabilisiert die Form der Hohlkammer 18.

Anschließend wird der Transport des Dichtungsprofilstrangs 54 durch die Transporteinheit 61 wieder aufgenommen, und der Einspritzvorgang an einem nächsten Abschnitt entlang der Längsrichtung kann erfolgen.

Zur Bereitstellung des Schaums weist die Vorrichtung 50 eine Schaumanlage 90 gemäß Fig. 3 auf. In die Schaumanlage 90 werden als Rohstoffe Luft 92 und ein Schaumgrundstoff 94 eingeleitet. Die Luft 92 wird über einen Verdichter 96 in einen Mischer 98 eingeleitet. Der Schaumgrundstoff 94 wird durch eine Fasspresse 100 in den Mischer 98 eingepresst. Die Luft 92 und der Schaumgrundstoff 94 werden in dem Mischer 98 zu einem unter Druck stehenden Schaum vermischt, homogenisiert und als aufschäumende Masse 68 an die Einspritzeinheit 58 weitergeleitet.

Eine Alternative zu der Vorrichtung 50 ist in Fig. 4 dargestellt. Teile, die mit denen aus Fig. 2 identisch sind, sind mit denselben Bezugszeichen wie in Fig. 2 gekennzeichnet.

Die Vorrichtung 110 weist eine Transporteinheit 61, eine Trenneinheit 62, eine Extrudiereinheit 52 sowie eine Einspritzeinheit 112 auf. Die Einspritzeinheit 112 ist auf einer Führungsschiene 114 mittels eines Laufrads 116 in der Richtung 118 beweglich gelagert. Mit Hilfe eines Motors 120 ist die Einspritzeinheit 112 auf der Führungsschiene 114 verfahrbar. Alternativ oder zusätzlich kann eine Handhabungseinheit als Führungseinheit die Einspritzeinheit in geeigneter Position bewegen und bereitstellen.

Der Dichtungsprofilstrang 54 wird wie bei der Variante gemäß Fig. 2 mit einer Geschwindigkeit v bereitgestellt. Die Einspritzeinheit 112 wird nun zu einem mit aufschäumender Masse 68 zu befüllenden Abschnitt des Dichtungsprofilstrangs 54 verfahren und läuft dann mit der Geschwindigkeit v mit der Bewegung des Dichtungsprofilstrangs 54 mit. Nunmehr wird nach dem bereits beschriebenen Verfahren mittels der Hohlnadel 66 aufschäumende Masse 68 in den Dichtungsprofilstrang 54 eingebracht. Wiederum wird die aufschäumende Masse 68 durch die in Fig. 3 gezeigte Schaumanlage 90 bereitgestellt.

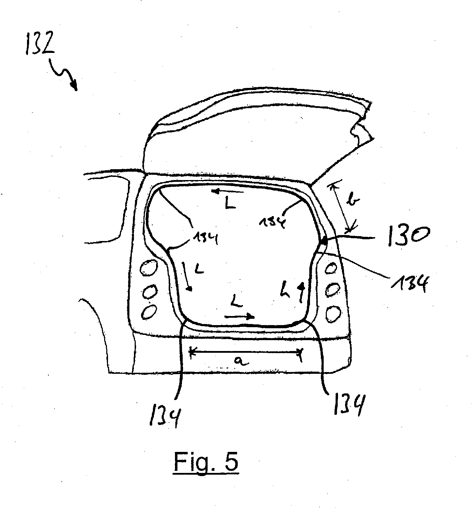

Die Dichtung 10 kann beispielsweise als Heckklappendichtung 130 in einem Kraftfahrzeug 132 eingesetzt werden, wie es in Fig. 5 beispielhaft dargestellt ist. Bei der Heckklappendichtung 130 sind entlang der Längsrichtung L mehrere Abschnitte 134 der Dichtung 10 nach dem oben anhand der Vorrichtungen 50, 110 gezeigten Verfahren mit Schaumstoff 19 ausgespritzt. Diese Abschnitte 134 sind vorab derart entlang der Längsrichtung L festgelegt, dass sie in den gekrümmten Bereichen der Heckklappenöffnung zu liegen kommen. Wie Fig. 5 zeigt, können die mehreren Abschnitte 134 in vorbestimmten Abständen a, b zueinander oder von den Enden der Heckklappendichtung 130 in der Längsrichtung L vorgesehen sein. In diesen Abschnitten 134 ist die aufgeschäumte Masse 68 mittels des oben erläuterten Verfahrens eingespritzt. Dadurch bleiben die Abschnitte 134 der Heckklappendichtung 130 formstabil und dichten die Heckklappe zuverlässig ab.

In den Vorrichtungen 50, 110 kann eine Steuereinheit zur Synchronisation der Prozessabläufe von Längenausgleichseinheit 56, Einspritzeinheit 58, Trenneinheit 62 und Transporteinheit 61 vorgesehen werden. Ferner kann die Längenmessung kann an einer beliebigen Stelle der Vorrichtung 50, 110 in der Nähe des Dichtungsprofilstrangs 54 durchgeführt werden.

Die Schaumanlage 90 kann vorteilhafterweise ohne weiteres zu bestehenden Produktionsstraßen hinzugefügt werden. Es ist ebenso denkbar, dass zur Herstellung der Dichtung 10 ein Dichtungsprofilstrang 54, der beispielsweise fertig auf Rollen geliefert wird, verwendet wird.

Die Härte des Schaumstoffs 19 kann an die geplante Verwendung der Dichtung 10 angepasst werden. Insbesondere kann dies dadurch geschehen, dass die Schaumdichte des Schaumstoffs 19 verändert wird. Dies kann beispielsweise dadurch erreicht werden, dass das Mischungsverhältnis von Luft 92 und Schaumgrundstoff 94 im Mischer 98 verändert wird. Ebenso kann ein anderer Schaumgrundstoff 94 verwendet werden.

Die Shore-Härte kann wenigstens zwischen ca. 45 Shore A und ca. 42 Shore 00 variiert werden. Durch diese breite Härteeinstellung ist keine Konturausformung der eingespritzten aufgeschäumten Masse 68 zur Härteeinstellung mehr notwendig. Ferner gewährleistet diese Möglichkeit der Härteeinstellung einen breiten Anwendungsbereich der erfindungsgemäßen Dichtung 10.

Die Hohlnadel 66 ist für nahezu alle Dichtungsprofilstränge 54 unabhängig von deren Geometrie verwendbar.

Durch das Einspritzen ist eine präzisere Anordnung der versteiften Bereiche als bei variabler Extrusion möglich.

Das erfindungsgemäße Verfahren trägt zur Verringerung der Kosten des Ausschusses bei, da nur gute Profilabschnitte dem Verfahren zugeführt werden. Die kostenintensive Erstellung eines variablen Extrusionswerkzeuges entfällt bei dem erfindungsgemäßen Verfahren.

Die erfindungsgemäße Vorrichtung 50, 110 zur Herstellung einer Dichtung 10, die das Verfahren zur Herstellung einer Dichtung 10 anwendet und die daraus erhaltene erfindungsgemäße Dichtung 10 bieten somit einen einfachen, zuverlässigen und preisgünstigen Weg, eine Dichtung 10 mit gekrümmten Abschnitten 134 formstabil zu halten.

### Bezugszeichenliste

- 10: Dichtung
- 12: Dichtungsabschnitt
- 14: Befestigungsabschnitt
- 16: Hohlkammerwand
- 17: Dichtlippe
- 18: Hohlkammer
- 19: Schaumstoff

- 20: Basisabschnitt
- 22: erster Schenkel
- 24: zweiter Schenkel
- 26: Aufnahmekanal
- 28: Vorsprung

- 30: Armierung

- 50: Vorrichtung
- 52: Extrudiereinheit
- 54: Dichtungsprofilstrang
- 56: Längenausgleichseinheit
- 58: Einspritzeinheit

- 60: Positioniereinheit
- 61: Transporteinheit
- 62: Trenneinheit
- 64: Eintragsventil
- 66: Hohlnadel
- 68: Rohschaum

- 70: Richtung

- 90: Schaumanlage

- 92: Luft
- 94: Schaumgrundstoff
- 96: Verdichter
- 98: Mischer

- 100: Fasspresse
- 110: Vorrichtung
- 112: Einspritzeinheit
- 114: Führungsschiene
- 116: Laufrad
- 118: Richtung
- 120: Motor

- 130: Heckklappendichtung
- 132: Kraftfahrzeug
- 134: Abschnitt

- v: Geschwindigkeit
- a: Abstand
- b: Abstand
- L: Längsrichtung

## Patentansprüche

1. Verfahren zur Herstellung einer Dichtung (10), insbesondere für ein Schließelement eines Kraftfahrzeugs (132), wobei sich die Dichtung (10) in einer Längsrichtung (L) erstreckt und eine Hohlkammer (18) aufweist, **dadurch gekennzeichnet, dass** in einem Abschnitt (134) der Dichtung (10) entlang der Längsrichtung (L) eine aufschäumende Masse (68) in die Hohlkammer (18) eingespritzt wird.

2. Verfahren nach Anspruch 1, **dadurch gekennzeichnet, dass** die aufschäumende Masse (68) derart eingespritzt wird, dass die Hohlkammer (18) wenigstens in einem Querschnitt in einer im Wesentlichen senkrecht zur Längsrichtung (L) verlaufenden Querrichtung innerhalb des Abschnittes (134) vollständig mit der aufschäumenden Masse (68) ausgefüllt ist.

3. Verfahren nach einem der Ansprüche 1 oder 2, **dadurch gekennzeichnet, dass** die aufschäumende Masse (68) derart eingespritzt wird, dass die Hohlkammer (18) entlang des Abschnittes (134) vollständig mit der aufschäumenden Masse (68) ausgefüllt ist.

4. Verfahren nach einem der Ansprüche 1 oder 2, **dadurch gekennzeichnet, dass** die aufschäumende Masse (68) derart eingespritzt wird, dass sie entlang der Längsrichtung (L) eine veränderliche vorbestimmte Querschnittform aufweist.

5. Verfahren nach einem der Ansprüche 1 bis 4, **dadurch gekennzeichnet, dass** ein vorbestimmtes Volumen aufschäumender Masse (68) eingespritzt wird.

6. Verfahren nach einem der Ansprüche 1 bis 5, **dadurch gekennzeichnet, dass** die aufschäumende Masse (68) in einen Abschnitt (134) eingespritzt wird, der beim bestimmungsgemäßen Gebrauch der Dichtung (10) einem gekrümmt verlaufenden Bereich der Dichtung (10) entspricht.

7. Verfahren nach einem der Ansprüche 1 bis 6, **dadurch gekennzeichnet, dass** die aufschäumende Masse (68) in mehreren Abschnitten (134) entlang der Längsrichtung (L) eingespritzt wird.

8. Verfahren nach einem der Ansprüche 1 bis 7, **dadurch gekennzeichnet, dass** die Abschnitte (134) in vorbestimmten Abständen zueinander vorgesehen werden.

9. Verfahren nach einem der Ansprüche 1 bis 8, **dadurch gekennzeichnet, dass** die Abschnitte (134) in äquidistanten Abständen vorgesehen werden.

10. Verfahren nach einem der Ansprüche 1 bis 9, **dadurch gekennzeichnet, dass** mit einer Hohlnadel (66) an einer Einstichstelle in die Hohlkammer (18) gestochen wird und die aufschäumende Masse (10) durch die Hohlnadel (66) in die Hohlkammer (18) eingespritzt wird.

11. Verfahren nach Anspruch 10, **dadurch gekennzeichnet, dass** die Hohlkammer (18) während des Einspritzens in einem vorgegebenen Abstand von der Einstichstelle zusammengedrückt wird.

12. Verfahren nach Anspruch 11, **dadurch gekennzeichnet, dass** der Abstand von der Einstichstelle zwischen ca. 30 mm und ca. 100 mm beträgt.

13. Verfahren nach einem der Ansprüche 1 bis 12, **dadurch gekennzeichnet, dass** die aufschäumende Masse (68) in einer Einspritzzeit zwischen ca. 0,5s und ca. 5s, vorzugsweise zwischen ca. 1s und ca. 3s, eingespritzt wird.

14. Verfahren nach einem der Ansprüche 1 bis 13, **dadurch gekennzeichnet, dass** die aufschäumende Masse (68) zum Aushärten wärmebehandelt wird.

15. Verfahren nach einem der Ansprüche 1 bis 14, **dadurch gekennzeichnet, dass** die Dichtung (10) aus einem elastomeren Werkstoff, vorzugsweise aus einem thermoplastischen Elastomer oder aus EPDM, extrudiert wird.

16. Verfahren nach einem der Ansprüche 1 bis 15, **dadurch gekennzeichnet, dass** die Dichtung (10) einen Dichtungsabschnitt (12) und einen Befestigungsabschnitt (14) aufweist und der Dichtungsabschnitt (12) und der Befestigungsabschnitt (14) koextrudiert werden.

17. Vorrichtung zur Herstellung einer Dichtung (10), insbesondere für ein Schließelement eines Kraftfahrzeugs (132), wobei sich die Dichtung (10) in einer Längsrichtung (L) erstreckt und eine Hohlkammer (18) aufweist, **gekennzeichnet durch** eine Einspritzeinheit (58, 112) zum Einspritzen einer aufschäumenden Masse (68) in die Hohlkammer (18) und **durch** eine Positioniereinheit (60) zur Positionierung der Dichtung (10) relativ zur Einspritzeinheit (58, 112), wobei die Dichtung (10) und/oder die Einspritzeinheit (58, 112) entlang der Längsrichtung (L) bewegbar ist.

18. Vorrichtung nach Anspruch 17, **dadurch gekennzeichnet, dass** die Einspritzeinheit (112) bewegbar und variabel ortsfest positionierbar ist.

19. Vorrichtung nach einem der Ansprüche 17 oder 18, **dadurch gekennzeichnet, dass** die Einspritzeinheit (112) über eine Führungseinheit bewegbar ist.

20. Vorrichtung nach Anspruch 19, **dadurch gekennzeichnet, dass** die Einspritzeinheit (112) an oder mittels der Führungseinheit variabel ortsfest festlegbar ist.

21. Vorrichtung nach einem der Ansprüche 19 oder 20, **dadurch gekennzeichnet, dass** die Führungseinheit wenigstens eine Handhabungseinheit, eine Führungsschiene (114) und/oder wenigstens ein Laufrad (116) aufweist.

22. Vorrichtung nach einem der Ansprüche 17 bis 21, **dadurch gekennzeichnet, dass** die Einspritzeinheit (112) in der und/oder entgegen der Längsrichtung (L) bewegbar ist.

23. Vorrichtung nach einem der Ansprüche 17 bis 22, **dadurch gekennzeichnet, dass** sie eine Extrusionseinheit (52) zum Extrudieren der Dichtung (10) aufweist.

24. Vorrichtung nach einem der Ansprüche 17 bis 23, **dadurch gekennzeichnet, dass** die Einspritzeinheit (112) mit einer vorbestimmten Geschwindigkeit (v) bewegbar ist.

25. Vorrichtung nach Anspruch 23 und nach Anspruch 24, **dadurch gekennzeichnet, dass** die Geschwindigkeit (v) relativ zu einer Prozessgeschwindigkeit der Extrusionseinheit (52) oder umgekehrt einstellbar ist.

26. Vorrichtung nach einem der Ansprüche 17 bis 25, **dadurch gekennzeichnet, dass** eine Trenneinheit (62) zum Ablängen der Dichtung (10) vorgesehen ist.

27. Dichtung (10), insbesondere zum Abdichten eines Schließelements eines Kraftfahrzeugs, die sich in einer Längsrichtung (L) erstreckt und eine Hohlkammer (18) aufweist, **dadurch gekennzeichnet, dass** in einem Abschnitt (134) entlang der Längsrichtung (L) eine aufgeschäumte Masse (68) in der Hohlkammer (18) eingespritzt ist.

28. Dichtung (10) nach Anspruch 27, **dadurch gekennzeichnet, dass** die Hohlkammer (18) wenigstens in einem Querschnitt in einer im Wesentlichen senkrecht zur Längsrichtung (L) verlaufenden Querrichtung innerhalb des Abschnittes (12) vollständig mit der aufgeschäumten Masse (68) ausgefüllt ist.

29. Dichtung (10) nach Anspruch 27 oder 28, **dadurch gekennzeichnet, dass** die Hohlkammer (18) entlang des Abschnittes (134) vollständig mit der aufgeschäumten Masse (68) ausgefüllt ist.

30. Dichtung (10) nach einem der Ansprüche 27 bis 29, **dadurch gekennzeichnet, dass** die aufgeschäumte Masse (68) in einem Abschnitt (134) entlang der Längsrichtung (L) vorgesehen ist, der beim bestimmungsgemäßen Gebrauch der Dichtung (10) einem gekrümmt verlaufenden Bereich der Dichtung (10) entspricht.

31. Dichtung (10) nach einem der Ansprüche 27 bis 30, **dadurch gekennzeichnet, dass** die aufgeschäumte Masse (68) in mehreren Abschnitten (134) entlang der Längsrichtung (L) vorgesehen ist.

32. Dichtung (10) nach einem der Ansprüche 27 bis 31, **dadurch gekennzeichnet, dass** die Abschnitte (134) in vorbestimmten Abständen zueinander vorgesehen sind.

33. Dichtung (10) nach einem der Ansprüche 27 bis 32, **dadurch gekennzeichnet, dass** die Abschnitte (134) in äquidistanten Abständen vorgesehen sind.

34. Dichtung (10) nach einem der Ansprüche 27 bis 33, **dadurch gekennzeichnet, dass** die aufgeschäumte Masse (68) aus einem Einkomponenten-Schaumstoff oder einem Zweikomponenten Schaumstoff gebildet ist.

35. Dichtung (10) nach einem der Ansprüche 27 bis 34, **dadurch gekennzeichnet, dass** die aufgeschäumte Masse (68) eine Shore-Härte von zwischen ca. 45 Sh A und ca. 42 SH 00 hat.

36. Dichtung (10) nach einem der Ansprüche 27 bis 35, **gekennzeichnet durch** einen Dichtungsabschnitt (12) und einen Befestigungsabschnitt (14), wobei die aufgeschäumte Masse (68) stoffschlüssig und/oder formschlüssig mit dem Dichtungsabschnitt (12) und/oder dem Befestigungsabschnitt (14) verbunden ist.

37. Dichtung (10) nach einem der Ansprüche 27 bis 36, **dadurch gekennzeichnet, dass** der Befestigungsabschnitt (14) einen Aufnahmekanal (26) zur Aufnahme eines starren Bauteils aufweist.
